# FASCICULE DE BREVET EUROPEEN

(11) **EP 2 347 219 B1**
(45) Date de publication et mention de la délivrance du brevet: **27.02.2013**
(21) Numéro de dépôt: 09744377.4
(22) Date de dépôt: 26.10.2009
(51) Int. Cl.: G01C 19/66

(54) **GYROLASER COMPRENANT UN BARREAU CYLINDRIQUE SOLIDE AMPLIFICATEUR, ET PROCÉDÉ ASSOCIÉ D'EXCITATION D'UN BARREAU CYLINDRIQUE SOLIDE AMPLIFICATEUR DE GYROLASER**
LASERKREISEL MIT EINEM ZYLINDRISCHEN FESTKÖRPER-STABLASERVERSTÄRKER UND DIESBEZÜGLICHES VERFAHREN ZUM ERREGEN EINES ZYLINDRISCHEN FESTKÖRPER-STABLASERKREISELVERSTÄRKERS
LASER GYRO COMPRISING A CYLINDRICAL SOLID-STATE ROD LASER AMPLIFIER, AND ASSOCIATED METHOD OF EXCITING A CYLINDRICAL SOLID-STATE ROD LASER GYRO AMPLIFIER

(30) Priorité: 14.11.2008 FR 0806376
(43) Date de publication de la demande: 27.07.2011
(73) Titulaire: THALES, 92200 Neuilly-sur-Seine (FR)
(72) Inventeur: LOIL, Eric, F-86100 Chatellerault (FR)
(74) Mandataire: Brunelli, Gérald
(86) Numéro de dépôt international: PCT/EP2009/064053
(87) Numéro de publication internationale: WO 2010/054923

(56) Documents cités:
- EP-A- 1 890 107
- NAKAGAWA K ET AL: "Highly sensitive detection of molecular absorption using a high finesse optical cavity" OPTICS COMMUNICATIONS, NORTH-HOLLAND PUBLISHING CO. AMSTERDAM, NL, vol. 107, no. 5-6, 1 mai 1994 (1994-05-01) , pages 369-372, XP022624426 ISSN: 0030-4018 [extrait le 1994-05-01]

## Description

L'invention porte sur un gyrolaser comprenant un barreau cylindrique solide amplificateur, un système de mesure de une à trois vitesses angulaires, et un procédé associé d'excitation d'un élément solide amplificateur.

Un gyromètre est un capteur de mouvement qui permet de mesurer la vitesse de rotation du référentiel du capteur par rapport à un référentiel galiléen, suivant un ou plusieurs axes.

Les gyromètres laser, également appelés gyrolasers, utilisent, dans leur majorité, un milieu amplificateur gazeux qui est habituellement un mélange d'hélium et de néon. Cependant, il est possible d'utiliser un gyrolaser à milieu amplificateur à état solide, dans lequel le milieu amplificateur gazeux est remplacé par un élément solide, par exemple une matrice de YAG (Yttrium-Aluminium-Grenat) dopée Néodyme.

Le principe de fonctionnement d'un gyrolaser est fondé sur l'effet Sagnac d'une cavité laser en anneau bidirectionnelle animée d'un mouvement de rotation. L'effet Sagnac induit une différence de fréquence Ω entre deux modes optiques d'émission dits contra-propagatifs se propageant en sens opposés à l'intérieur de la cavité. Dans les milieux solides habituellement utilisés, dont le Nd:YAG, les modes se propageant dans des sens opposés se partagent les mêmes atomes amplificateurs. On parle alors de gain homogène. Lorsque les deux modes contra-propagatifs ont des fréquences égales ou très proches, le signal d'interférence qui en résulte est une onde stationnaire, éventuellement mobile. Les atomes du milieu à gain participent d'autant plus au processus d'émission stimulée qu'ils sont proches d'un ventre de l'onde stationnaire et d'autant moins qu'ils sont proches d'un noeud. Il se crée alors dans le milieu à gain un réseau d'inversion de population, inscrit par l'onde stationnaire. Ce réseau subsiste tant que les fréquences des deux modes contra-propagatifs sont suffisamment proches. Son contraste est d'autant plus faible que la différence de fréquence est grande devant l'inverse du temps de vie du niveau excité.

La demande de brevet français FR 2905005 (THALES), décrit un gyrolaser comportant au moins une cavité optique en anneau et un milieu amplificateur à l'état solide agencés de façon que deux modes optiques dits contra-propagatifs peuvent se propager en sens inverse l'un de l'autre à l'intérieur de ladite cavité optique et traverser le milieu amplificateur. Le milieu amplificateur est accouplé à un dispositif transducteur assurant au milieu amplificateur un mouvement de translation périodique selon un axe sensiblement parallèle à la direction de propagation desdits modes optiques.

Un tel dispositif permet de moduler la position longitudinale du cristal actif autour d'une position moyenne, afin que les atomes du cristal soient en mouvement par rapport aux noeuds et aux ventres de la figure d'interférence formée par les deux modes contra-propagatifs, quelle que soit la différence de fréquence entre ces deux modes. Un tel dispositif permet de diminuer le contraste du réseau de gain, et donc ses effets néfastes pour les mesures de gyrométrie tout en ne modifiant pas la longueur de la cavité. Il permet également d'atténuer les effets de la rétrodiffusion induite par le milieu amplificateur. Enfin, ce dispositif constitue potentiellement un dispositif de traitement de la zone aveugle pouvant, selon les cas, se substituer ou être complémentaire du dispositif habituel d'activation mécanique.

Un tel dispositif doit permettre une fréquence d'excitation élevée, nécessaire à une utilisation dans le domaine de l'aviation civile ou dans un système d'armes. Cette fréquence d'excitation doit être supérieure à la différence de fréquences qui apparaît entre les deux modes contra-propagatifs pour une vitesse angulaire en entrée du gyromètre correspondant au domaine de mesure recherché.

Une difficulté technique réside dans l'obtention d'une fréquence d'excitation mécanique suffisamment élevée, de l'ordre de quelques centaines de kHz, combinée à une amplitude d'oscillation importante, de l'ordre de quelques microns, sans altération des caractéristiques géométriques et dimensionnelles du cristal formant le milieu amplificateur solide. En effet, la fréquence d'excitation recherchée se rapproche des fréquences propres de vibrations du cristal ou de tout autre solide de dimension voisine, de l'ordre de quelques millimètres.

Un but de l'invention est de pallier aux divers problèmes précédemment cités.

Notamment, la présente invention permet de réaliser un résonateur mécanique parfait répondant aux conditions précitées, en :
- limitant la taille et le nombre d'éléments de ce dispositif pour éviter de mettre en résonance des parties inutiles, voire perturbatrice vis-à-vis de la vibration d'ensemble recherchée ;
- concevant des assemblages permettant de raccorder ces éléments entre eux sans risque d'atténuation de l'excitation ni de déformations indésirables au niveau du cristal ;
- utilisant une architecture de résonateur garantissant le meilleur isolement possible vis-à-vis du support extérieur, par exemple en exploitant le principe du diapason dans laquelle la vibration d'une partie du résonateur (cristal) est dynamiquement équilibrée par celle d'une autre partie, parfaitement symétrique (contre-balourd), garantissant ainsi une résultante de vibration quasi-nulle au point de liaison choisi comme point de fixation isolée vis-à-vis du support extérieur.

Aussi, il est proposé, selon un aspect de l'invention, un gyrolaser comprenant un barreau cylindrique solide amplificateur comprenant un axe de révolution. Le gyrolaser comprend, en outre :
- un élément piézo-électrique annulaire d'excitation dudit élément solide amplificateur à une fréquence f prédéterminée, selon ledit axe de révolution, ledit élément piézo-électrique annulaire étant monté fixement sur une des deux sections droites extrémale du barreau cylindrique solide amplificateur de sorte que son axe de révolution coïncide avec ledit axe de révolution dudit barreau cylindrique solide amplificateur ; et
- un contre-balourd dynamique annulaire monté fixement sur la section droite extrêmale libre dudit élément piézo-électrique annulaire de sorte que son axe de révolution coïncide avec ledit axe de révolution dudit barreau cylindrique solide amplificateur ;

Un tel gyrolaser permet de réaliser, conformément aux principes décrits précédemment, l'excitation du barreau de cristal solide à la fréquence et à l'amplitude visée pour les applications recherchées, tout en garantissant le minimum de perturbations d'ordre géométrique ou de variations dimensionnelles du cristal préjudiciables au bon fonctionnement du gyrolaser.

Selon un mode de réalisation, le diamètre interne dudit élément piézo-électrique annulaire et le diamètre interne dudit contre-balourd dynamique annulaire sont supérieurs à un seuil.

Ainsi, le faisceau laser incident n'est pas obstrué ou limité, car ce seuil est supérieur au diamètre du faisceau laser.

Dans un mode de réalisation, le diamètre interne dudit élément piézo-électrique annulaire et le diamètre interne dudit contre-balourd dynamique annulaire sont égaux.

Ainsi, tout l'espace disponible autour du passage du faisceau est optimisé afin de privilégier la compacité et la rigidité des éléments constitutifs du résonateur ainsi que leur mode d'assemblage.

Selon un mode de réalisation, l'élément solide amplificateur comprend une combinaison quelconque des milieux solides amplificateurs suivants: cristal Nd:YAG, Nd:KGW, Nd:YVO₄, Yb:GdCOB, et Nd,Cr:GSGG. Gyrolaser selon l'une des revendications précédentes, dans lequel ladite fréquence f peut être comprise entre 100 et 250 kHz.

Dans un mode de réalisation, lesdits montages fixes sont des collages rigides de module d'Young de l'ordre du GPa, et d'épaisseur fine inférieure à 0,02 mm.

L'utilisation de collages rigides présente l'avantage de réduire les contraintes et les déformations du barreau de cristal lors de son assemblage avec les autres éléments et de constituer une interface fiable et efficace vis-à-vis de la transmission des ondes vibratoires avec une faible atténuation de l'excitation à travers l'épaisseur du joint.

Selon un mode de réalisation, ledit élément piézo-électrique annulaire comprend deux électrodes surfaciques en forme de couronnes centrales disposées sur les sections droites extrémales dudit élément piézo-électrique annulaire.

Les électrodes surfaciques commandées en tensions électriques, permettent de gérer les vibrations du barreau cylindrique solide amplificateur.

Dans un mode de réalisation, le gyrolaser comprend des moyens de suspension adaptés pour fixer et de découpler en vibration le barreau cylindrique solide amplificateur avec un système extérieur ou un support sur lequel il est monté, lesdits moyens de suspension comprenant une couronne extérieure dudit élément piézo-électrique annulaire.

La section annulaire externe de l'élément piézo-électrique annulaire a ainsi un rôle de suspension permettant la fixation et le découplage en vibration du barreau cylindrique solide amplificateur vis-à-vis du système embarquant le gyrolaser ou d'un support tel un boîtier externe du gyrolaser.

Selon un mode de réalisation, lesdits moyens de suspension comprennent, en outre, de la colle souple de module d'Young de l'ordre du MPa.

L'utilisation d'une telle colle souple accentue le découplage en vibration du barreau cylindrique solide amplificateur vis-à-vis du système embarquant le gyrolaser ou d'un support tel un boîtier externe du gyrolaser.

Système de mesure de une à trois vitesses angulaires ou de mesure de une à trois positions angulaires relatives selon des axes respectifs, caractérisé en ce qu'il comporte un à trois gyrolasers selon l'une des revendications précédentes, respectivement orientés selon lesdits axes respectifs, et montés sur une structure mécanique commune.

Un tel système de mesure multiaxes permet la mise en commun de sous-ensembles, tels les miroirs, ou de moyens de servitude, tels les dispositifs d'activation, dans un ensemble compact et homogène favorable à l'encombrement, au poids ou aux performances.

Procédé d'excitation d'un barreau cylindrique solide amplificateur de gyrolaser, comprenant un axe de révolution, caractérisé en ce l'on excite ledit élément solide amplificateur à une fréquence f prédéterminée, par un élément piézo-électrique annulaire monté fixement sur une des deux sections droites extrémale du barreau cylindrique solide amplificateur de sorte que son axe de révolution coïncide avec ledit axe de révolution dudit barreau cylindrique solide amplificateur, et on équilibre le balourd induit par un contre-balourd dynamique annulaire monté fixement sur la section droite extrêmale libre dudit élément piézo-électrique annulaire de sorte que son axe de révolution coïncide avec ledit axe de révolution dudit barreau cylindrique solide amplificateur.

L'invention sera mieux comprise à l'étude de quelques modes de réalisation décrits à titre d'exemples nullement limitatifs et illustrés par les dessins annexés sur lesquels :
- la figure 1 est un schéma synoptique en vue de coupe d'un mode de réalisation d'un gyrolaser selon un aspect de l'invention ; et
- la figure 2 est un schéma synoptique en vue externe d'un gyrolaser selon la figure 1, selon un aspect de l'invention.

Sur les différentes figures, les éléments ayant des références identiques sont identiques.

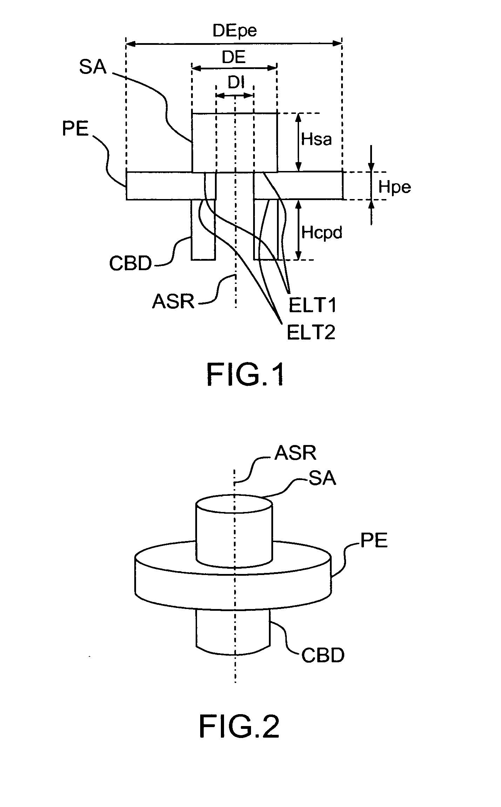

Tel qu'illustré sur la figure 1, un gyrolaser en coupe, d'axe de symétrie de révolution ASR, est représenté.

Le gyrolaser comprend un barreau cylindrique solide amplificateur, tel un cristal Nd:YAG, référencé SA. En variante, l'élément amplificateur à état solide peut être une combinaison quelconque des milieux solides amplificateurs Nd:KGW, Nd:YVO₄, Yb:GdCOB, et Nd,Cr:GSGG.

Un élément piézo-électrique annulaire PE, commandée par deux électrodes ELT1 et ELT2 annulaires, permet de mettre en vibration l'élément solide amplificateur en forme de barreau cylindrique SA, à une fréquence f déterminée, selon l'axe ASR. La géométrie du barreau cylindrique solide amplificateur SA et en particulier son dimensionnement, est élaborée de sorte qu'à la fréquence de vibration f, il puisse être considéré comme un solide indéformable. L'élément piézo-électrique annulaire PE est monté fixement, par collage rigide, sur une section droite extrémale du barreau cylindrique solide amplificateur SA. De manière fonctionnelle, la géométrie du barreau cylindrique solide amplificateur SA et en particulier son dimensionnement, est élaboré de sorte qu'à la fréquence de vibration f, il puisse être considéré comme un solide indéformable. Un tel collage rigide est typiquement d'une épaisseur inférieure à environ 0,02 mm, et de module d'Young de l'ordre du GPa.

En variante, cette mise en vibration, à une fréquence pouvant aller jusqu'à 250 kHz, peut être effectuée par excitation thermique, mécanique magnétique, ou toute combinaison de ces excitations.

Le gyrolaser comprend un contre-balourd dynamique ou contre-balourd CBD monté fixement par collage rigide d'une épaisseur inférieure à environ 0,02 mm, de module d'Young de l'ordre du GPa, sur la section droite extrêmale libre de l'élément piézo-électrique annulaire PE, de sorte que son axe de révolution coïncide avec l'axe de révolution ASR du barreau cylindrique solide amplificateur SA.

On a ainsi une zone élastique active formée par la partie centrale de l'élément piézo-électrique annulaire PE, et une zone élastique inactive formée par la partie périphérique de l'élément piézo-électrique annulaire PE.

La partie centrale est excitée électriquement en mode axial pour obtenir l'oscillation souhaitée du barreau cylindrique solide amplificateur SA, mais générant un effet en mode radial, car l'élément piézo-électrique annulaire PE se déforme également dans le sens radial. Mais la partie inactive externe de l'élément piézo-électrique annulaire PE permet de filtrer une grande partie des vibrations qui sont transmises à un système extérieur ou un support sur lequel il est monté.

On a ainsi un découplage en vibration, qui peut être amélioré, par exemple par un montage par collage souple de module d'Young de l'ordre du MPa.

Le contre-balourd CBD permet l'équilibrage de la vibration axiale du barreau cylindrique solide amplificateur SA. Ce contre-balourd dynamique CBD est lui-même mis en vibration axiale dans le sens opposée à la vibration du barreau cylindrique solide amplificateur SA. On a ainsi une résultante de vibration axiale sensiblement nulle au niveau de l'élément piézo-électrique PE intermédiaire servant de point de fixation de l'ensemble, ce qui constitue un excellent découplage dynamique vis-à-vis du support extérieur.

A titre d'exemple, on peut obtenir des vibrations à une fréquence f supérieure à 250 kHz pour une hauteur Hsa du barreau cylindrique solide amplificateur d'environ 3 mm et un diamètre d'environ 3 mm. Le diamètre externe DEpe de l'élément piézo-électrique annulaire PE est alors d'environ 10 mm, et le diamètre interne DI, commun à l'élément piézo-électrique annulaire PE et au contre-balourd dynamique CBD, est d'environ 3 mm.

La présente invention, permet d'obtenir un gyrolaser comprenant un élément solide amplificateur dans un mouvement vibratoire de translation, à une fréquence élevée pouvant aller jusqu'à 250 kHz.

## Revendications

1. Gyrolaser comprenant un barreau cylindrique solide amplificateur (SA) comprenant un axe de révolution (ASR), ledit gyrolaser comprenant
- un élément piézo-électrique annulaire (PE) d'excitation dudit élément solide amplificateur à une fréquence f prédéterminée, selon ledit axe de révolution (ASR), ledit élément piézo-électrique annulaire (PE) étant monté fixement sur une des deux sections droites extrémale du barreau cylindrique solide amplificateur (SA) de sorte que son axe de révolution coïncide avec ledit axe de révolution (ASR) dudit barreau cylindrique solide amplificateur (SA);
et **caracterisé en ce que** le gyrolaser comprend
- un contre-balourd dynamique annulaire (CBD) monté fixement sur la section droite extrêmale libre dudit élément piézo-électrique annulaire (PE) de sorte que son axe de révolution coïncide avec ledit axe de révolution (ASR) dudit barreau cylindrique solide amplificateur (SA) ;

2. Gyrolaser selon la revendication 1, dans lequel le diamètre interne (DI) dudit élément piézo-électrique annulaire (PE) et le diamètre interne (DI) dudit contre-balourd dynamique annulaire (CBD) sont supérieur à un seuil.

3. Gyrolaser selon la revendication 2, dans lequel le diamètre interne (DI) dudit élément piézo-électrique annulaire et le diamètre interne (DI) dudit contre-balourd dynamique annulaire sont égaux.

4. Gyrolaser selon l'une des revendications précédentes, dans lequel l'élément solide amplificateur (SA) comprend une combinaison quelconque des milieux solides amplificateurs suivants: cristal Nd:YAG, Nd:KGW, Nd:YVO₄, Yb:GdCOB, et Nd,Cr:GSGG.

5. Gyrolaser selon l'une des revendications précédentes, dans lequel ladite fréquence f peut être comprise entre 100 et 250 kHz

6. Gyrolaser selon l'une des revendications précédentes, dans lequel lesdits montages fixes sont des collages rigides de module d'Young de l'ordre du GPa, et d'épaisseur fine inférieure à 0,02 mm.

7. Gyrolaser selon l'une des revendications précédentes, dans lequel ledit élément piézo-électrique annulaire (PE) comprend deux électrodes surfaciques (ELT1, ELT2) en forme de couronnes centrales annulaires disposées sur les sections droites extréma!es dudit élément piézo-électrique annulaire (PE).

8. Gyrolaser selon l'une des revendications précédentes, comprenant des moyens de suspension adaptés pour fixer et découpler en vibration le barreau cylindrique solide amplificateur (SA) avec un système extérieur ou un support sur lequel il est monté, lesdits moyens de suspension comprenant une section annulaire externe dudit élément piézo-électrique annulaire (PE).

9. Gyrolaser selon la revendication 8, dans lequel lesdits moyens de suspension comprennent, en outre, de la colle souple de module d'Young de l'ordre du MPa.

10. Système de mesure de une à trois vitesses angulaires ou de mesure de une à trois positions angulaires relatives selon des axes respectifs, **caractérisé en ce qu'**il comporte un à trois gyrolasers selon l'une des revendications précédentes, respectivement orientés selon lesdits axes respectifs, et montés sur une structure mécanique commune.

11. Procédé d'excitation d'un barreau cylindrique solide amplificateur (SA) de gyrolaser, comprenant un axe de révolution (ASR), caractérisé en ce l'on excite ledit élément solide amplificateur (SA) à une fréquence f prédéterminée, par un élément piézo-électrique annulaire (PE) monté fixement sur une des deux sections droites extrémale du barreau cylindrique solide amplificateur (SA) de sorte que son axe de révolution coïncide avec ledit axe de révolution (ASR) dudit barreau cylindrique solide amplificateur (SA), et on équilibre le balourd induit par un contre-balourd dynamique annulaire (CBD) monté fixement sur la section droite extrêmale libre dudit élément piézo-électrique annulaire (PE) de sorte que son axe de révolution coïncide avec ledit axe de révolution (ASR) dudit barreau cylindrique solide amplificateur (SA).

## Claims

1. A gyrolaser comprising a solid cylindrical amplifying bar (SA) comprising an axis of revolution (ASR), said gyrolaser comprising:
- an annular piezoelectric element (PE) for exciting said solid amplifying element at a predetermined frequency f along said axis of revolution (ASR), said annular piezoelectric element (PE) being fixedly mounted on one of the two straight end cross-sections of said solid cylindrical amplifying bar (SA), so that its axis of revolution coincides with said axis of revolution (ASR) of said solid cylindrical amplifying bar (SA), and **characterised in that** said gyrolaser comprises:
- an annular dynamic counterbalance (CBD) fixedly mounted on the free straight end cross-section of said annular piezoelectric element (PE) so that its axis of revolution coincides with said axis of revolution (ASR) of said solid cylindrical amplifying bar (SA).

2. The gyrolaser according to claim 1, wherein the internal diameter (DI) of said annular piezoelectric element (PE) and the internal diameter (DI) of said annular dynamic counterbalance (CBD) are greater than a threshold.

3. The gyrolaser according to claim 2, wherein the internal diameter (DI) of said annular piezoelectric element and the internal diameter (DI) of said annular dynamic counterbalance are equal.

4. The gyrolaser according to any one of the preceding claims, wherein said solid amplifying element (SA) comprises any combination of the following solid amplifying media: crystal Nd:YAG, Nd:KGW, Nd:YVO₄, Yb:GdCOB and Nd, Cr:GSGG.

5. The gyrolaser according to any one of the preceding claims, wherein said frequency f can be between 100 and 250 kHz.

6. The gyrolaser according to any one of the preceding claims, wherein said fixed mountings are rigid bonds with a Young modulus of the order of GPa and with a fine thickness of less than 0.02 mm.

7. The gyrolaser according to any one of the preceding claims, wherein said annular piezoelectric element (PE) comprises two surface electrodes (ELT1, ELT2) in the form of central annular rings that are arranged on the straight end cross-sections of said annular piezoelectric element (PE).

8. The gyrolaser according to any one of the preceding claims, comprising suspension means that are designed for fixing and vibration decoupling said solid cylindrical amplifying bar (SA) with an external system or a support on which it is mounted, said suspension means comprising an external annular cross-section of said annular piezoelectric element (PE).

9. The gyrolaser according to claim 8, wherein said suspension means further comprise flexible glue with a Young modulus of the order of MPa.

10. A system for measuring from one to three angular speeds or for measuring from one to three relative angular positions along respective axes, **characterised in that** it comprises from one to three gyrolasers according to any one of the preceding claims, respectively oriented along said respective axes and mounted on a common mechanical structure.

11. A method for exciting a solid cylindrical amplifying bar (SA) of a gyrolaser, comprising an axis of revolution (ASR), **characterised in that** said solid amplifying element (SA) is excited at a predetermined frequency f by an annular piezoelectric element (PE) that is fixedly mounted on one of the two straight end cross-sections of said solid cylindrical amplifying bar (SA), so that its axis of revolution coincides with said axis of revolution (ASR) of said solid cylindrical amplifying bar (SA) and the induced unbalance is balanced by an annular dynamic counterbalance (CBD) that is fixedly mounted on the free straight end cross-section of said annular piezoelectric element (PE), so that its axis of revolution coincides with said axis of revolution (ASR) of said solid cylindrical amplifying bar (SA).

## Patentansprüche

1. Laserkreisel, der einen massiven zylindrischen Verstärkungsstab (SA) mit einer Drehachse (ASR) umfasst, wobei der Laserkreisel Folgendes umfasst:
- ein ringförmiges piezoelektrisches Element (PE) zum Anregen des massiven Verstärkungselements mit einer vorbestimmten Frequenz f entlang der Drehachse (ASR), wobei das ringförmige piezoelektrische Element (PE) fest an einem der beiden geraden Endquerschnitte des massiven zylindrischen Verstärkungsstabs (SA) montiert ist, so dass seine Drehachse mit der Drehachse (ASR) des massiven zylindrischen Verstärkungsstabs (SA) übereinstimmt,
und **dadurch gekennzeichnet, dass** der Laserkreisel Folgendes umfasst:
- eine ringförmige dynamische Gegenunwucht (CBD), die an dem freien geraden Endquerschnitt des ringförmigen piezoelektrischen Elementes (PE) fest montiert ist, so dass seine Drehachse mit der Drehachse (ASR) des massiven zylindrischen Verstärkungsstabs (SA) übereinstimmt.

2. Laserkreisel nach Anspruch 1, wobei der Innendurchmesser (DI) des ringförmigen piezoelektrischen Elements (PE) und der Innendurchmesser (DI) der ringförmigen dynamischen Gegenunwucht (CBD) größer als ein Schwellenwert sind.

3. Laserkreisel nach Anspruch 2, wobei der Innendurchmesser (DI) des ringförmigen piezoelektrischen Elements und der Innendurchmesser (DI) der ringförmigen dynamischen Gegenunwucht gleich sind.

4. Laserkreisel nach einem der vorherigen Ansprüche, wobei das massive Verstärkungselement (SA) eine beliebige Kombination der folgenden massiven Verstärkungsmedien beinhaltet: Kristall Nd:YAG, Nd:KGW, Nd:YVO₄, Yb:GdCOB und Nd,Cr:GSGG.

5. Laserkreisel nach einem der vorherigen Ansprüche, wobei die Frequenz f zwischen 100 und 250 kHz betragen kann.

6. Laserkreisel nach einem der vorherigen Ansprüche, wobei die festen Montagen starre Verleimungen mit einem Young-Modul in der Größenordnung von GPa und mit einer feinen Dicke von weniger als 0,02 mm sind.

7. Laserkreisel nach einem der vorherigen Ansprüche, wobei das ringförmige piezoelektrische Element (PE) zwei Oberflächenelektroden (ELT1, ELT2) in Form von ringförmigen zentralen Ringen umfasst, die auf den geraden Endquerschnitten des ringförmigen piezoelektrischen Elements (PE) angeordnet sind.

8. Laserkreisel nach einem der vorherigen Ansprüche, der Aufhängungsmittel umfasst, die zum Befestigen und Vibrationsentkoppeln des massiven zylindrischen Verstärkungsstabs (SA) mit einem externen System oder einer Auflage ausgelegt sind, auf der es montiert ist, wobei das Aufhängungsmittel einen externen ringförmigen Querschnitt des ringförmigen piezoelektrischen Elements (PE) umfasst.

9. Laserkreisel nach Anspruch 8, wobei das Aufhängungsmittel ferner flexiblen Klebstoff mit einem Young-Modul in der Größenordnung von MPa umfasst.

10. System zum Messen von ein bis drei Winkelgeschwindigkeiten oder zum Messen von ein bis drei relativen Winkelpositionen entlang jeweiligen Achsen, **dadurch gekennzeichnet, dass** es ein bis drei Laserkreisel nach einem der vorherigen Ansprüche umfasst, die jeweils entlang den jeweiligen Achsen orientiert und auf einer gemeinsamen mechanischen Struktur montiert sind.

11. Verfahren zum Anregen eines massiven zylindrischen Laserkreisel-Verstärkungsstabs (SA) mit einer Drehachse (ASR), **dadurch gekennzeichnet, dass** das massive Verstärkungselement (SA) mit einer vorbestimmten Frequenz f durch ein ringförmiges piezoelektrisches Element (PE) angeregt wird, das fest auf einem der beiden geraden Endquerschnitte des massiven zylindrischen Verstärkungsstabs (SA) montiert ist, so dass seine Drehachse mit der Drehachse (ASR) des massiven zylindrischen Verstärkungsstabs (SA) übereinstimmt und die induzierte Unwucht mit einer ringförmigen dynamischen Gegenunwucht (CBD) ausgeglichen wird, die fest auf dem freien geraden Endquerschnitt des ringförmigen piezoelektrischen Elements (PE) montiert ist, so dass seine Drehachse mit der Drehachse (ASR) des massiven zylindrischen Verstärkungsstabs (SA) übereinstimmt.
